# FASCICULE DE BREVET EUROPEEN

(11) **EP 3 623 245 B1**
(45) Date de publication et mention de la délivrance du brevet: **30.06.2021**
(21) Numéro de dépôt: 19196569.8
(22) Date de dépôt: 10.09.2019
(51) Int. Cl.: B61D 7/32, B61D 7/20, B61D 7/28, E01B 27/02

(54) **DISPOSITIF DE DÉCHARGEMENT DE BALLAST, ET WAGON FERROVIAIRE DE BALLASTAGE ÉQUIPÉ D'UN TEL DISPOSITIF**
VORRICHTUNG ZUM ENTLADEN VON SCHOTTER, UND SCHIENENWAGGON ZUR GLEISSCHOTTERUNG, DER MIT EINER SOLCHEN VORRICHTUNG AUSGESTATTET IST
DEVICE FOR UNLOADING BALLAST, AND RAILWAY VEHICLE FOR BALLASTING EQUIPPED WITH SUCH A DEVICE

(30) Priorité: 14.09.2018 FR 1871046
(43) Date de publication de la demande: 18.03.2020
(73) Titulaire: Rolanfer Dausse Participations, 57970 Yutz (FR)
(72) Inventeur: DAUSSE, Stéphanie, 57140 LA MAXE (FR)
(74) Mandataire: Cabinet Bleger-Rhein-Poupon

(56) Documents cités:
- DE-A1-102016 106 552
- FR-A1- 3 014 066
- US-A- 1 600 310

## Description

La présente invention a pour objet un dispositif de déchargement de ballast depuis un wagon ferroviaire de ballastage, c'est-à-dire pour déverser du ballast sur une voie entre les rails et extérieurement à ceux-ci, et le nivellement du ballast ainsi déversé, ainsi qu'un wagon ferroviaire de ballastage équipé d'un tel dispositif.

On connaît déjà des wagons ferroviaires de ballastage, lesquels consistent en des wagons-trémies permettant de transporter le ballast en vrac, équipés d'une ou de plusieurs trémies chacune munie d'une trappe de fond, pour déverser le ballast par gravité sous le wagon lui-même. On connaît également des wagons ferroviaires de ballastage permettant de déverser le ballast par gravité ou avec l'assistance d'un tapis roulant à des endroits fixes par rapport au wagon, comme décrit dans les documents FR 3 014 066 A1 et US 1 600 310 A.

Il peut toutefois être nécessaire que le produit soit déversé en des endroits précis autres que directement sous le wagon. Ce qui est le cas dans les travaux de voie ferrée où il faut que le ballast soit déversé de part ou d'autre de la voie en des endroits précis, répartis sur toute la largeur y compris l'entrevoie et la banquette sans avoir besoin de reprise mécanique pour que le ballast arrive à sa destination.

La difficulté réside dans le transfert du produit depuis la trappe centrale jusqu'aux points les plus éloignés de la voie ferrée, plus encore lorsque le wagon est en dévers. La hauteur de chute et l'écoulement libre sur une tôle déployée à cet effet ne permettent pas d'atteindre les zones recherchées les plus extrêmes. De plus ces systèmes sont très encombrants et sont de fait un obstacle à la vue afin de diriger les opérations de ballastage du côté opposé à celui où se tient l'opérateur.

Pour tenter de résoudre ces inconvénients, il a été proposé des wagons de ballastage de construction spécifique, avec des trémies plus hautes. Ils présentent toutefois d'autres inconvénients, notamment d'être de capacité moindre. Les systèmes simplifiés de répartition n'évitent pas des reprises importantes pour obtenir une bonne répartition du ballast.

Par ailleurs le fait de déverser le ballast d'une hauteur plus importante, génère plus de poussières et de bruit, ce qui constitue des inconvénients importants pour les opérateurs.

On connaît aussi des wagons de ballastage, comme dans le document FR 2 912 158 au Nom de la Demanderesse, où le déversement du ballast est réalisé dans un cadre doseur, équipé de tôles déflectrices, qui répartit et régale le ballast de manière régulière sur toute la largeur de la traverse. Cependant, ces wagons ne permettent pas de faire un appoint ponctuel ni de ballaster les zones les plus éloignées de la voie.

La présente invention a pour but de proposer dispositif de déchargement de ballast depuis un wagon ferroviaire de ballastage remédiant aux divers inconvénients précités, en permettant notamment :
- la limitation des émissions sonores et poussiéreuses lors du déchargement du ballast,
- un déversement du ballast sur toutes les zones recherchées, au centre de la voie, de part et d'autre des rails sur les têtes de traverses, dans l'entrevoie, sur la tête de banquette et en pied de banquette,
- de voir tous les déchargements depuis la piste sans guidage en entrevoie,

Le but de la présente invention est donc d'accroître les capacités de déchargement, ainsi que d'améliorer les conditions de travail, c'est-à-dire de réduire au maximum toutes sortes d'émissions, soient-elles sonores ou poussiéreuses.

La présente invention a également pour objet un wagon ferroviaire équipé d'un tel dispositif de déchargement de ballast.

Le dispositif de déchargement de ballast depuis un wagon ferroviaire de ballastage selon l'invention, comprend une trémie fermée inférieurement par une trappe, et il se caractérise en ce qu'il comporte en outre, en dessous de ladite trémie, une tourelle rendue orientable en étant montée pivotante autour d'un axe vertical, et qui est équipée d'une trappe et d'une goulotte de déversement du ballast, ladite goulotte étant articulée sur ladite tourelle en sorte de permettre d'amener son extrémité libre au plus près du sol et donc de l'emplacement de déversement.

Selon une caractéristique additionnelle du dispositif de déchargement selon l'invention, la trémie est munie intérieurement, à proximité de la tourelle, d'un organe déflecteur présentant la forme d'un V renversé, pointe vers le haut.

Selon une autre caractéristique additionnelle du dispositif de déchargement selon l'invention, la tourelle est mue au moyen d'un moteur hydraulique et d'une transmission par chaîne ou par engrenage, tandis que la trappe est manœuvrée par un vérin hydraulique selon un mouvement de translation par rapport à la tourelle.

Selon une autre caractéristique additionnelle du dispositif de déchargement selon l'invention, la goulotte est manœuvrée en pivotement par rapport à la tourelle autour d'un axe horizontal, au travers d'un vérin hydraulique.

Selon une autre caractéristique additionnelle du dispositif de déchargement selon l'invention, la goulotte est fermée et les zones d'articulation sur la tourelle sont équipées de soufflets d'étanchéité.

Selon une autre caractéristique additionnelle du dispositif de déchargement selon l'invention, il est équipé d'un système de pulvérisation d'eau.

Selon une autre caractéristique additionnelle du dispositif de déchargement selon l'invention, l'extrémité libre de la goulotte est munie d'un sabot en acier résistant à l'usure abrasive pour régaler le ballast déposé.

Les avantages et les caractéristiques du dispositif de déchargement de ballast selon l'invention, ressortiront plus clairement de la description qui suit et qui se rapporte au dessin annexé, lequel en représente un mode de réalisation non limitatif.

Dans le dessin annexé :
- la figure 1 représente une vue schématique latérale en élévation d'un wagon ferroviaire équipé d'un dispositif de déchargement de ballast selon l'invention.
- la figure 2 représente une vue en plan du même wagon ferroviaire,
- la figure 3 représente une vue schématique de face en élévation du dispositif de déchargement selon l'invention.
- la figure 4 représente une vue en élévation du même dispositif.
- la figure 5 représente la même vue du même dispositif dans une autre configuration d'utilisation.
- la figure 6 représente une vue en perspective du même dispositif.

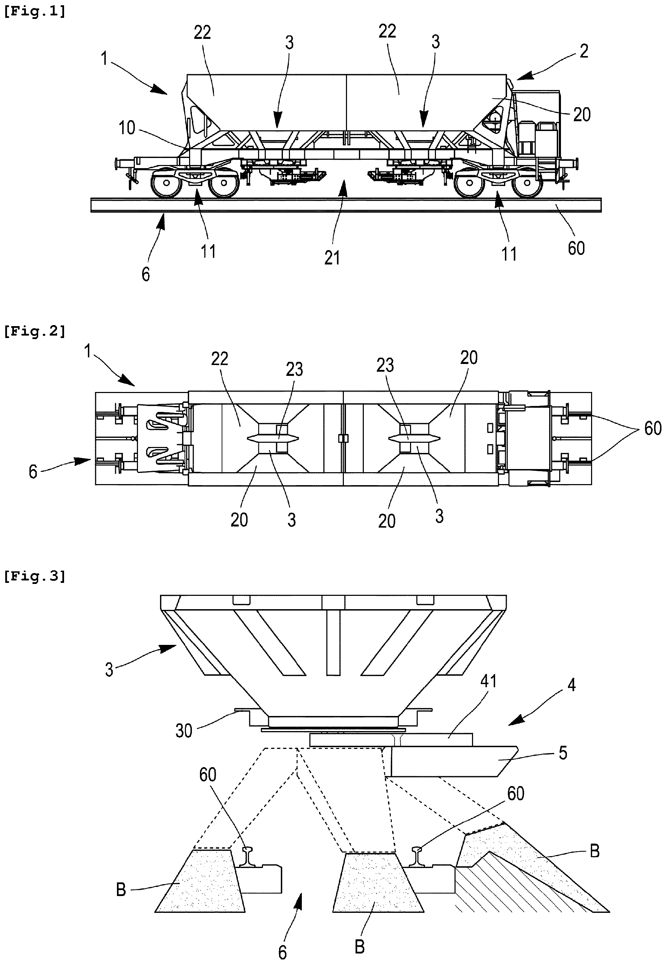

En référence à la figure 1, on peut voir qu'un wagon ferroviaire 1 selon l'invention comporte de manière connue en soi un châssis 10 porté par deux bogies 11, et sur lequel est montée une trémie 2 qui, de manière classique, est ouverte supérieurement en vue de permettre son chargement, et présente latéralement des parois 20 inclinées convergeant vers le fond 21.

En référence également à la figure 2, on peut voir que la trémie 2 est divisée en deux compartiments 22, chacun débouchant dans un dispositif de déchargement 3 selon l'invention.

On notera la présence dans le fond de chacun des compartiments 22, d'un organe 23 consistant en une tôle pliée en V retourné pointe vers le haut, qui permet de ballaster au loin et en dévers, en augmentant localement l'angle de la trémie.

Chacun des dispositifs de déchargement 3, dont l'un est représenté sur la figure 3, comprend une tourelle 4, apte à pivoter autour d'un axe, vertical par rapport au wagon ferroviaire 1, et qui est munie d'une goulotte 5, montée inclinable sur la tourelle 4 pour pouvoir prendre plusieurs positions entre les positions extrêmes horizontale et verticale, ou presque verticale, et en sorte qu'en association avec le pivotement de la tourelle 4, cette goulotte 5 puisse être utilisée dans différentes configurations, telles que, non limitativement, celles représentées en traits discontinus sur la figure 3.

Sur cette figure on peut voir une voie 6 constituée de deux rails 60, au-dessus de laquelle est positionné le wagon ferroviaire 1 dont seul un dispositif de déchargement 3 est représenté.

Par la mobilité de la goulotte 5, à savoir le pivotement de la tourelle 4 et l'inclinaison de la goulotte 5, il est possible de déverser du ballast B non seulement de part et d'autre des rails 60 mais également bien au-delà extérieurement la voie 6 en un endroit bien précis au sol, sans que cela soit réalisé d'une hauteur susceptible de générer du bruit et/ou de la poussière.

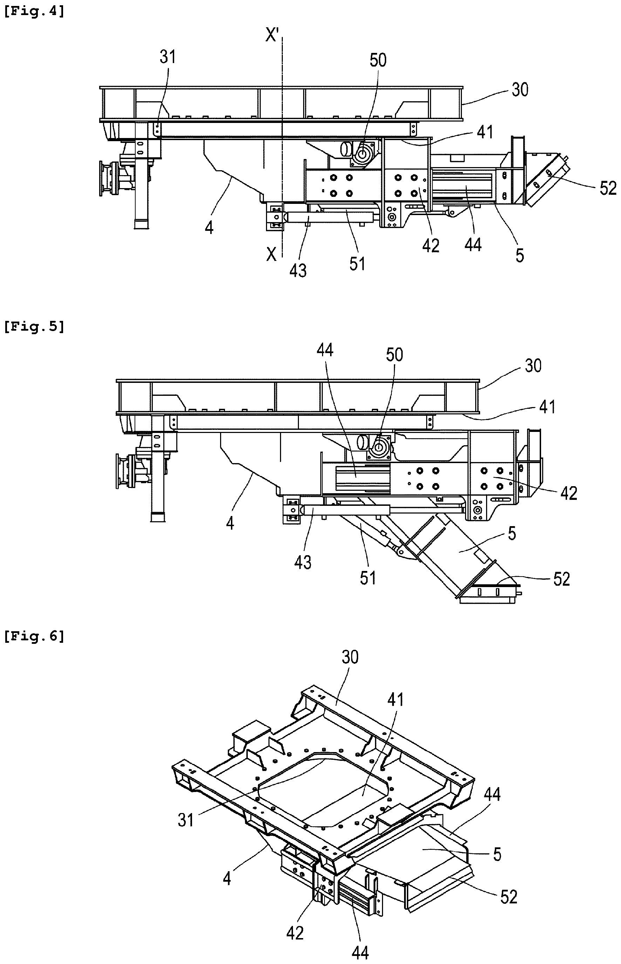

En référence maintenant aux figures 4, 5 et 6, on peut voir plus en détail le dispositif de déchargement 3 selon l'invention lequel comprend un bâti 30 solidarisable au châssis 10, non visible, sur lequel est montée en rotation autour d'un axe vertical XX' une tourelle 4, au travers d'un couronne dentée 31, tandis que sur la tourelle 3 d'une part peut pivoter sur un arbre 50 d'axe horizontal, une goulotte 5, et d'autre part peut coulisser une trappe 41, interposée entre le bâti 30 et la goulotte 5.

On notera que les termes vertical et horizontal sont utilisés de manière relative à un wagon ferroviaire qui serait disposé à l'horizontale.

Le déplacement de la trappe 41 est réalisé au travers de moyens de coulissement 42 mobile sur des rails 44 de la tourelle 4, et la trappe 41 est mue par un vérin hydraulique 43, visible sur les figures 4 et 5.

Sur la figure 4 la goulotte 5 est représentée en position repliée à l'horizontale, tandis que sur la figure 5 elle est représentée en position complètement déployée, en l'occurrence en faisant un angle de 45°. L'inclinaison de la goulotte 5, par pivotement sur l'arbre 50, est commandée par un vérin hydraulique 51.

De manière avantageuse, l'extrémité libre de la goulotte 5 est munie d'un sabot 52 en acier résistant à l'usure abrasive, non limitativement de type connu sous la marque déposée « CREUSABRO », et conformé pour régaler le ballast déposé.

Par ailleurs, le dispositif de déchargement selon l'invention est équipé d'un système de pulvérisation d'eau, non représenté, qui permet de contenir les émissions de poussières.

## Revendications

1. Dispositif de déchargement de ballast depuis un wagon ferroviaire de ballastage, comprenant une trémie (2) fermée inférieurement par une trappe, comportant en outre, en dessous de ladite trémie (2), une tourelle (4) rendue orientable en étant montée pivotante autour d'un axe vertical (XX'), **caractérisé en ce que** cette tourelle est équipée d'une trappe (41) et d'une goulotte (5) de déversement du ballast (B), ladite goulotte (5) étant articulée sur ladite tourelle (4) en sorte de permettre d'amener son extrémité libre au plus près du sol et donc de l'emplacement de déversement.

2. Dispositif de déchargement selon la revendication 1, **caractérisé en ce que** la trémie (2) est munie intérieurement, à proximité de la tourelle (4), d'un organe déflecteur (23) présentant la forme d'un V renversé pointe vers le haut.

3. Dispositif de déchargement selon la revendication 1 ou la revendication 2, **caractérisé en ce que** la tourelle (4) est mue au moyen d'un moteur hydraulique et d'une transmission par chaîne ou par engrenage, tandis que la trappe (41) est manœuvrée par un vérin hydraulique (43) selon un mouvement de translation par rapport à la tourelle (4).

4. Dispositif de déchargement selon l'une quelconque des revendications 1 à 3, **caractérisé en ce que** la goulotte (5) est manœuvrée en pivotement par rapport à la tourelle autour d'un axe horizontal (50), au travers d'un vérin hydraulique (51).

5. Dispositif de déchargement selon l'une quelconque des revendications 1 à 4, **caractérisé en ce que** la goulotte (5) est fermée et les zones d'articulation sur la tourelle (4) sont équipées de soufflets d'étanchéité.

6. Dispositif de déchargement selon l'une quelconque des revendications 1 à 5, **caractérisé en ce qu'**il est équipé d'un système de pulvérisation d'eau.

7. Dispositif de déchargement selon l'une quelconque des revendications 1 à 6, **caractérisé en ce que** l'extrémité libre de la goulotte est munie d'un sabot (52) en acier résistant à l'usure abrasive pour régaler le ballast déposé.

8. Wagon ferroviaire de ballastage (1), **caractérisé en ce qu'**il est équipé d'un dispositif de déchargement (3) selon l'une quelconque des revendications 1 à 7.

## Patentansprüche

1. Vorrichtung zum Entladen von Schotter von einem Schienenwaggon zur Gleisschotterung, umfassend einen Trichter (2), der unten durch eine Klappe verschlossen ist, umfassend ausserdem unter dem Trichter (2) einen Revolverkopf (4), der dadurch orientierbar gemacht ist, dass er schwenkbar um eine vertikale Achse (XX') montiert ist, **dadurch gekennzeichnet, dass** dieser Revolverkopf mit einer Klappe (41) und einer Rinne (5) zum Entladen des Schotters (B) ausgestattet ist, wobei die besagte Rinne (5) so an dem Revolverkopf (4) angelenkt ist, dass ermöglicht wird, dass sein freies Ende nähest möglich an den Boden und damit an die Stelle des Enladens gebracht wird.

2. Entladevorrichtung nach Anspruch 1, **dadurch gekennzeichnet, dass** der Trichter (2) innen nahe dem Revolverkopf (4) mit einem Ablenkorgan (23) versehen ist, das eine nach oben gerichtete umgekehrte V-Form aufweist.

3. Entladevorrichtung nach Anspruch 1 oder Anspruch 2, **dadurch gekennzeichnet, dass** der Revolverkopf (4) mittels eines Hydraulikmotors und eines Ketten- oder Zahnradantriebes angetrieben wird, während die Klappe (41) von einem Hydraulikzylinder (43) in einer Translationsbewegung relativ zum Revolverkopf (4) angetrieben wird.

4. Entladevorrichtung nach irgendeinem der Ansprüche 1 bis 3, **dadurch gekennzeichnet, dass** die Rinne (5) durch einen Hydraulikzylinder (51) relativ zum Revolverkopf um eine horizontale Achse (50) in Schwenkung betätigt wird.

5. Entladevorrichtung nach irgendeinem der Ansprüche 1 bis 4, **dadurch gekennzeichnet, dass** die Rinne (5) geschlossen ist und die Gelenkzonen am Revolverkopf (4) mit Dichtungsbalgen ausgestattet sind.

6. Entladevorrichtung nach irgendeinem der Ansprüche 1 bis 5, **dadurch gekennzeichnet, dass** sie mit einem Wassersprühsystem ausgestattet ist.

7. Entladevorrichtung nach irgendeinem der Ansprüche 1 bis 6, **dadurch gekennzeichnet, dass** das freie Ende der Rinne mit einem Schuh (52) aus Stahl versehen ist, der gegen abrasiven Verschleiß beständig ist, um den abgesetzten Schotter zu nivellieren.

8. Schienenwaggon zur Gleisschotterung (1), **dadurch gekennzeichnet, dass** er mit einer Entladevorrichtung (3) nach irgendeinem der Ansprüche 1 bis 7 ausgestattet ist.

## Claims

1. Device for unloading ballast from a railway vehicle for ballasting, comprising a hopper (2) closed at the bottom by means of a hatch, including furthermore, below said hopper (2), a turret (4) made steerable by being mounted pivoting about a vertical axis (XX'), wherein this turret is equipped with a hatch (41) and a chute (5) for unloading the ballast (B), said chute (5) being articulated on said turret (4) so as to permit to bring its free end as close as possible to the ground and, hence, to the site of unloading.

2. Unloading device according to claim 1, wherein the hopper (2) is provided internally, near the turret (4), with a deflector organ (23) having the shape of an inverted V pointing upwards.

3. Unloading device according to claim 1 or claim 2, wherein the turret (4) is moved by means of a hydraulic motor and a chain or gear transmission, while the hatch (41) is operated by a hydraulic cylinder (43) according to a translational movement with respect to the turret (4).

4. Unloading device according to any one of claims 1 to 3, wherein the chute (5) is pivoted with respect to the turret about a horizontal axis (50), through a hydraulic cylinder (51).

5. Unloading device according to any one of claims 1 to 4, wherein the chute (5) is closed and the articulation areas on the turret (4) are equipped with sealing bellows.

6. Unloading device according to any one of claims 1 to 5, wherein it is equipped with a water spray system.

7. Unloading device according to any one of claims 1 to 6, wherein the free end of the chute is provided with a shoe (52) made of steel resistant to abrasive wear to level the deposited ballast.

8. Railway vehicle for ballasting (1), wherein it is equipped with an unloading device (3) according to any one of claims 1 to 7.
